# EUROPÄISCHE PATENTSCHRIFT

(11) **EP 0 949 836 B1**
(45) Veröffentlichungstag und Bekanntmachung des Hinweises auf die Patenterteilung: **01.02.2006**
(21) Anmeldenummer: 98250437.5
(22) Anmeldetag: 16.12.1998
(51) Int. Cl.: H04Q 11/00, H04L 12/46

(54) **Verfahren zur Signalisierung zwischen einem Endgerät eines ISDN-Anschlusses und einer Vermittlungsstelle sowie Vorrichtung zur Durchführung des Verfahrens**
Method for signalling between a device of an ISDN termination and a switch, as well as an apparatus for carrying out the method
Procédé de signalisation entre un terminal d'une terminaison RNIS et un central de commutation, ainsi qu'un dispositif pour la mise en oeuvre du procédé

(30) Priorität: 23.12.1997 DE 19758380
(43) Veröffentlichungstag der Anmeldung: 13.10.1999
(73) Patentinhaber: Teles AG Informationstechnologien, 10587 Berlin (DE)
(72) Erfinder: Schindler, Sigram, Prof. Dr., 14109 Berlin (DE); Illg, Andreas, 10555 Berlin (DE); Lüdtke, Karsten, 12167 Berlin (DE); Paetsch, Frank, 10961 Berlin (DE); Wegener, Rochus, 13503 Berlin (DE)
(74) Vertreter: Müller, Wolfram Hubertus

(56) Entgegenhaltungen:
- US-A- 5 602 909
- US-A- 5 636 210
- US-A- 5 692 126

## Beschreibung

### Gegenstand der Erfindung

Die Erfindung betrifft ein Verfahren zur Signalisierung zwischen einem Endgerät eines ISDN-Anschlusses und einer Vermittlungsstelle eines Telekommunikationsnetzes nach dem Oberbegriff des Anspruch 1 sowie eine Vorrichtung zur Durchführung des Verfahrens. Die Erfindung bezieht sich insbesondere auf ein neues Verfahren zum Least Cost Routing unter Verwendung eines am ISDN-Anschluß angeschlossenen Least Cost Routers.

### Hintergrund der Erfindung

An einem ISDN-Anschluß sind die einzelnen Endgeräte üblicherweise über einen Bus mit der Standardschnittstelle S bzw. T verbunden. Eine Netzabschlußeinheit NT setzt die Signale am Bezugspunkt S bzw. am Bezugspunkt T in Signale um, die zur Übertragung zur lokalen Vermittlungsstelle geeignet sind bzw. setzt von der Vermittlungsstelle kommende Signale in Signale um, die für die Übertragung zu den einzelnen Endgeräten am Bus geeignet sind. Der ISDN-Basisanschluß sieht dabei auf der Teilnehmerleitung die S₀-Schnittstelle vor, die sich zwischen der Netzabschlußeinheit NT und den einzelnen Endgeräten befindet.

Es sind sogenannte Least Cost Router bekannt, die einen intelligenten Telefonzusatz darstellen und zwischen den Telekommunikations-Endgeräten und der Netzabschlußeinheit NT angeordnet sind. Derartige Least Cost Router suchen anhand einer sogenannten Routing-Tabelle jeweils automatisch den kostengünstigsten Telekommunikations-Anbieter für eine Wählverbindung heraus (Carrier Selection) und führen den Verbindungsaufbau zu einem Einwahlsystem des Kommunikationsnetzes des ausgewählten Telekommunikations-Anbieters automatisch durch.

Die z.B. aus dem Dokument EP 0 796 021 A2 bekannten Least Cost Router unterbrechen dabei den Standard-Bus zwischen den Endgeräten und dem Netzabschluß, um die Signalisierungsinformationen der jeweiligen Endgeräte zu erfassen und durch geeignete eigene Signalisierungsinformationen zu ersetzen. Durch die Unterbrechung des Busses weisen die bekannten Least Cost Router notwendigerweise zwei ISDN-Ports und zwei zu den jeweiligen Ports gehörende Computerchips auf. Durch die Verwendung von zwei ISDN-Ports und zwei Computerchips entstehen nicht unerhebliche Kosten bei der Herstellung der Least Cost Router.

Aus dem Dokument US 5,289,536 ist ein Verfahren zur Verwendung eines Least Cost Routers bekannt. Dabei ist der Least Cost Router parallel zu einer Vermittlungsstelle zwischen einer Anschlussleitung und einer Verbindungsleitung angeordnet. Der Least Cost Router selber besteht aus einem Prozessor und einem Speicher. Enthalten die von einem Telekommunikationsendgerät ausgehenden Daten die Rufnummer einer anzurufenden Partei, wird in Abhängigkeit davon und von einer im Speicher gespeicherten Kostentabelle die günstigste Verbindungsleitung aus- und angewählt.

Die Verwendung von Least Cost Routern zur Durchführung eines alternativen Routings beim Aufbau einer Verbindung von einem rufenden Endgerät zu einem gerufenen Endgerät stellt einen Sonderfall des allgemeineren Konzeptes dar, bestimmte Signalisierungsinformationen eines Endgerätes zu ändern oder zu modifizieren, um zusätzliche Funktionalitäten, wie die Auswahl eines kostengünstigen Kommunikationsnetzes, zu verwirklichen.

### Aufgabe der Erfindung

Der vorliegenden Erfindung liegt die Aufgabe zugrunde, ein Verfahren zur Signalisierung zwischen einem Endgerät eines ISDN-Telekommunikationsanschlusses und einer Vermittlungsstelle eines Telekommunikationsnetzes sowie eine Vorrichtung zur Durchführung des Verfahrens zur Verfügung zu stellen, die ausgehend von bestimmten standardgemäßen Signalisierungsbefehlen eines Endgerätes zur Erschließung neuer Funktionalitäten in kostengünstiger Weise eine Erweiterung und/oder Modifizierung der Signalisierungsinformationen ermöglichen. Insbesondere soll die Erfindung ermöglichen, für ein Least Cost Routing die vom Endgerät gewählte Rufnummer in kostengünstiger Weise zu modifizieren.

### Zusammenfassung der Erfindung

Diese Aufgabe wird erfindungsgemäß durch ein Verfahren mit den Merkmalen des Anspruchs 1 und einer Vorrichtung mit den Merkmalen des Anspruchs 20 gelöst. Bevorzugte und vorteilhafte Ausgestaltungen der Erfindung sind in den abhängigen Ansprüchen angegeben.

Die erfindungsgemäße Lösung ist von dem Gedanken getragen, daß eine an die S/T-Schnittstelle eines ISDN-Telekommunikationsanschlusses direkt angeschlossene Vorrichtung die Transaktionsnummer eines Signalisierungsbefehles sowie die Endeinrichtungs-Identifikation eines rufenden Endgerätes mithört und sich daraufhin gegenüber der Vermittlungsstelle gewissermaßen als das rufende Endgerät ausgibt und hierzu unter Verwendung der mitgehörten Endeinrichtungs-Identifikation und der mitgehörten Transaktionsnummer selbst Signalisierungsbefehle an die Vermittlungsstelle sendet. Das Mithören erfolgt dabei ohne Unterbrechung der Verbindung des Endgeräts des ISDN-Telekommunikationsanschlusses zur S/T-Schnittstelle.

Die Erfindung stellt ein völlig neues Konzept zur Verfügung, bei dem ein an die S/T-Schnittstelle angeschlossenes, den Standard-Bus nicht unterbrechendes Gerät nach Mithören der erforderlichen Signalisierungsinformationen sich gegenüber der Vermittlungsstelle als Endgerät "ausgibt" und dabei zusätzliche Signalisierungsinformationen an die Vermittlungsstelle sendet, wodurch zusätzliche Aufgaben bzw. Funktionalitäten verwirklicht werden können. Insbesondere ermöglicht die erfindungsgemäße Lösung eine automatische Modifikation der Rufnummer eines gerufenen Endgerätes insofern, als das mithörende Gerät anhand von vorgegebenen Routing-Tabellen für eine gewünschte Verbindung automatisch das kostengünstigste Kommunikationsnetz heraussucht und die Wählinformation derart modifiziert, daß zunächst ein Verbindungsaufbau zu einem Einwahlsystem des ausgewählten Kommunikationsnetzes erfolgt.

Weitere zusätzliche Funktionalitäten, die durch die erfindungsgemäße Lösung verwirklicht werden können, sind beispielsweise das automatische Trennen eines Gesprächs durch die mithörende Vorrichtung, sobald ein vorgegebener Gebührenbetrag des Gesprächs überschritten wird.

Die erfindungsgemäße Lösung zeichnet sich weiter dadurch aus, daß die einzusetzende Hardware sehr kostengünstig ausgebildet werden kann. Durch den Anschluß der Vorrichtung (etwa eines Least Cost Routers) an die S/T-Schnittstelle des ISDN-Anschlusses brauchen lediglich ein ISDN-Port und ein entsprechender Chip in der Vorrichtung vorgesehen werden. Gegenüber dem Stand der Technik, bei dem ein Least Cost Router den S₀-Bus unterbricht und daher zwei ISDN-Ports benötigt, werden somit ein ISDN-Port und ein Chip eingespart.

Da die Signalisierungsbefehle eines Endgerätes erfindungsgemäß durch Mithören erfaßt werden, ist keine Unterbrechung des ISDN-Busses durch einen "zweiarmigen Router" gemäß der Stand der Technik erforderlich. Die vorliegende "einarmige" Lösung benötigt lediglich einen einfachen Anschluß an die S/T-Schnittstelle des ISDN-Anschlusses.

In einer bevorzugten, ersten Variante des erfindungsgemäßen Verfahrens zum Aufbau einer Verbindung zu einem rufenden Endgerät unter Verwendung eines Least Cost Routers trennt der Least Cost Router nach Mithören der Transaktionsnummer und der Endeinrichtungs-Identifikation die im Aufbau befindliche Verbindung des rufenden Endgerätes mit einem geeigneten Signalisierungsbefehl (RELEASE COMPLETE), und baut daraufhin mit der gleichen Endeinrichtungs-Identifikation und der gleichen Transaktionsnummer eine Verbindung zu einem Einwahlsystem in ein geeignetes (d.h. kostengünstiges) Kommunikationsnetz auf, worauf über das gewählte Kommunikationsnetz eine Verbindung zwischen dem rufenden und dem gerufenen Endgerät hergestellt wird.

Das vom Least Cost Router ausgesandte neue SETUP-Protokolldatenelement weist dabei zusätzlich die Einwählnummer in das Einwahlsystem des ausgewählten Kommunikationsnetzes auf. Zum Mithören der vom Endgerät ausgesandten Signalisierungsbefehle wertet der Least Cost Router bevorzugt den Echo-D-Kanal (auch E-Kanal genannt) aus. Alternativ wertet der Least Cost Router direkt den D-Kanal aus, wobei der Least Cost Router einen eigenen Empfänger für das Mithören in Senderichtung aufweist.

Diese erste Variante des erfindungsgemäßen Verfahrens sieht somit vor, daß der Least Cost Router die im Aufbau befindliche Verbindung des rufenden Endgerätes beendet, wobei es sich gegenüber der Vermittlungsstelle als Endgerät "ausgibt", und daraufhin mit einer modifizierten Zieladresse ein erneutes SETUP-Protokolldatenelement für das Endgerät aussendet.

In einer bevorzugten Ausgestaltung dieser ersten Variante blockiert der Least Cost Router nach Trennen der im Aufbau befindlichen Verbindung des rufenden Endgerätes den D-Kanal. Dadurch wird verhindert, daß das Endgerät bis zum Senden eines neuen SETUP-Protokolldatenelementes durch den Least Cost Router weitere Signalisierungsbefehle, insbesondere Wahlinformationen, an die Vermittlungsstelle senden kann. Derartige Wahlinformationen würden von der Vermittlungsstelle als Fehler aufgefaßt, da nach dem Trennen der im Aufbau befindlichen Verbindung keine weiteren Wahlinformationen vom Endgerät erwartet werden.

Eine Blockierung des D-Kanals durch den Least Cost Router erfolgt bevorzugt durch Senden einer Folge von NULL-Bits oder durch Senden eines sehr großen Datenpakets. Da ein Endgerät nach dem ISDN-Standard mindestens acht EINS-Bits abwarten muß, bevor es senden darf, wird durch das Senden einer steten Folge von Null-Bits der D-Kanal blockiert.

In einer zweiten bevorzugten Variante des erfindungsgemäßen Verfahrens überschreibt der Least Cost Router nach Mithören der Transaktionsnummer sowie der Endeinrichtungs-Identifikation ein vom Endgerät ausgesandtes Protokolldatenelement derart, daß die Vermittlungsstelle einen Signalisierungsbefehl des Endgerätes gar nicht erst erkennt. Das Protokolldatenelement wird vom Least Cost Router gewissermaßen unbrauchbar gemacht oder "zerstört", wobei die Transaktionsnummer und die Endeinrichtungs-Identifikation vom Least Cost Router jedoch erfaßt werden. Nach "Zerstören" des Protokolldatenelementes erzeugt der Least Cost Router mit der gleichen Endeinrichtungs-Ideritifikation und der gleichen Transaktionsnummer ein modiziziertes Protokolldatenelement, das zusätzlich die Einwählnummer eines ausgewählten Kommunikationsnetzes enthält, und überträgt dieses Protokolldatenelement an die Vermittlungsstelle, die den Ruf daraufhin zum ausgewählten Kommunikationsnetz routet.

Bei dem Protokolldatenelement, das unbrauchbar gemacht wird, handelt es sich in einer bevorzugten Ausgestaltung um ein SETUP-Protokolldatenelement, wobei der Least Cost Router daraufhin ein modifiziertes SETUP-Protokolldatenelement erzeugt und an die Vermittlungsstelle sendet.

Diese Variante der Erfindung weist den Vorteil auf, daß die Vermittlungsstelle von vornherein keinen Verbindungsaufbau erkennt und daher auch kein Verbindungsabbau durch den Least Cost Router veranlaßt werden muß, so daß insgesamt weniger Frames an die Vermittlungsstelle übersandt werden müssen. Auch wird das Problem vermieden, daß während eines Zeitfensters zwischen dem Signalisierungsbefehl zur Trennung der im Aufbau befindlichen Verbindung und dem Senden eines neuen SETUP-Protokolldatenelementes gemäß der oben beschriebenen Variante 1 der D-Kanal blockiert werden muß. Ein weiterer Vorteil der zweiten Variante liegt darin, daß nur ein SETUP-Protokolldatenelement von der Vermittlungsstelle empfangen wird und dieses daher auch nur einmal den Verbindungswunsch durch Senden eines entsprechenden Protokolldatenelementes quittiert.

Die genannte Variante des erfindungsgemäßen Verfahrens setzt voraus, daß im SETUP Protokolldatenelement bereits in einem Maße Wahlinformationen (d.h. Ziffern der zu wählenden Nummer) vorhanden sind, daß der Least Cost Router anhand der Routing-Tabelle ein geeignetes Kommunikationsnetz auswählen kann und die Einwahlnummer in dieses Kommunikationsnetz im neuen SETUP Datenelement einfügt. Sofern das SETUP Datenelement des rufenden Endgerätes jedoch noch keine oder nicht genügend Wahlinformationen aufweist, so kann der Least Cost Router ein eigenes SETUP nicht aussenden.

Für diesen Fall ist alternativ vorgesehen, daß nach Vorliegen ausreichender Wahlinformationen zur Vornahme eines Routing ein sich an das SETUP-Protokolldatenelement anschließendes INFO-Protokolldatenelement überschrieben wird. Daraufhin sendet der Least Cost Router mit der gleichen Endeinrichtungs-Identifikation und der gleichen Transaktionsnummer ein modifiziertes INFO-Protokolldatenelement, das zusätzlich die Einwählnummer des ausgewählten Kommunikationsnetzes enthält, an die Vermittlungsstelle, die den Ruf zum ausgewählten Kommunikationsnetz routet.

In einer bevorzugten Ausgestaltung des erfindungsgemäßen Verfahrens erfolgt eine Überschreibung des Datenelementes in Teilen des Datenelementes, die vom rufenden Endgerät nicht kontrolliert werden. Dies hat zur Folge, daß die nicht erfolgte Signalisierung zur Vermittlungsstelle vom Endgerät nicht erkannt wird, so daß dieses nicht erneut versucht, das Protokolldatenelement an die Vermittlungsstelle zu senden. Eine geeignete Überschreibung des Protokolldatenelementes erfolgt dabei bevorzugt durch Überschreibung des endständigen FLAG-Bytes oder eines Prüf-Bytes.

Für den Fall, daß das Einwahlsystem des ausgewählten Telekommunikationsnetzes besetzt ist, stehen mehrere alternative Verfahren zur Verfügung. In einer ersten Alternative wird die BESETZT-Information an das rufende Endgerät durchgereicht, worauf dieses einen erneuten Verbindungsaufbau versucht, in den der Least Cost Router diesmal nicht eingreift, so daß ein Verbindungsaufbau über das normale, teurere Kommunikationsnetz stattfindet.

Alternativ fragt der Least Cost Router vor Aufbau einer Verbindung zu einem Einwahlsystem bei diesem an, ob das Einwahlsystem zur Annahme eines Gespräches bereit ist oder aber sich im Besetzt-Zustand befindet. Nur wenn das Einwahlsystem sich nicht im Besetzt-Zustand befindet, wird ein SETUP-Protokolldatenelement vom Least Cost Router an das Einwahlsystem gesandt.

Eine dritte Alternative für den Besetzt-Fall des Einwahlsystems, die bei allen drei Varianten des erfindungsgemäßen Verfahrens anwendbar ist, besteht darin, daß das von der Vermittlungsstelle im Besetzt-Fall an das Endgerät ausgesandte DISCONNECT-Datenelement vom Least Cost Router überschrieben ("zerstört") wird, so daß es vom Endgerät nicht als DISCONNECT-Datenelement erkannt wird und das Endgerät daher weiterhin auf ein ALERT oder ein CONNECT Datenelement wartet. Der Least Cost Router nimmt ein alternatives Routing vor und sendet ein neues SETUP-Protokolldatenelement mit der Einwählnummer eines Einwahlsystems in ein anderes Kommunikationsnetz aus. Der Verbindungsaufbau erfolgt dann über dieses "zweitbeste" Kommunikationsnetz. Ist auch hier das Einwahlsystem besetzt, so wird das DISCONNECT-Datenelement erneut zertört und solange ein alternatives Routing durchgeführt, bis ein freies Einwahlsystem gefunden ist.

### Beschreibung mehrerer Ausführungsbeispiele

Die Erfindung wird nachfolgend unter Bezugnahme auf die Figuren der Zeichnung anhand mehrerer Ausführungsbeispiele näher erläutert. Es zeigen:
- Figur 1 -: eine erfindungsgemäße Anordnung mehrerer Endgeräte und eines Least Cost Routers an einem ISDN-Teilnehmeranschluß;
- Figur 2 -: eine Anordnung mehrerer Endgeräte und eines Least Cost Routers an einem ISDN-Teilnehmeranschluß gemäß dem Stand der Technik;
- Figur 3 -: schematisch ein SETUP-Protokolldatenelement;
- Figur 4a -: schematisch den Befehlsablauf bei einem ersten erfindungsgemäßen Verfahren zum Verbindungsaufbau;
- Figur 4b -: schematisch den Befehlsablauf bei einem zweiten erfindungsgemäßen Verfahren zum Verbindungsaufbau;
- Figur 5 -: ein Ablaufdiagramm beim Verbindungsaufbau nach dem Verfahren gemäß Figur 4b;
- Figur 6 -: schematisch den Befehlsablauf bei einem dritten erfindungsgemäßen Verfahren zum Verbindungsaufbau und
- Figur 7 -: schematisch einen erfindungsgemäßen Least Cost Router.

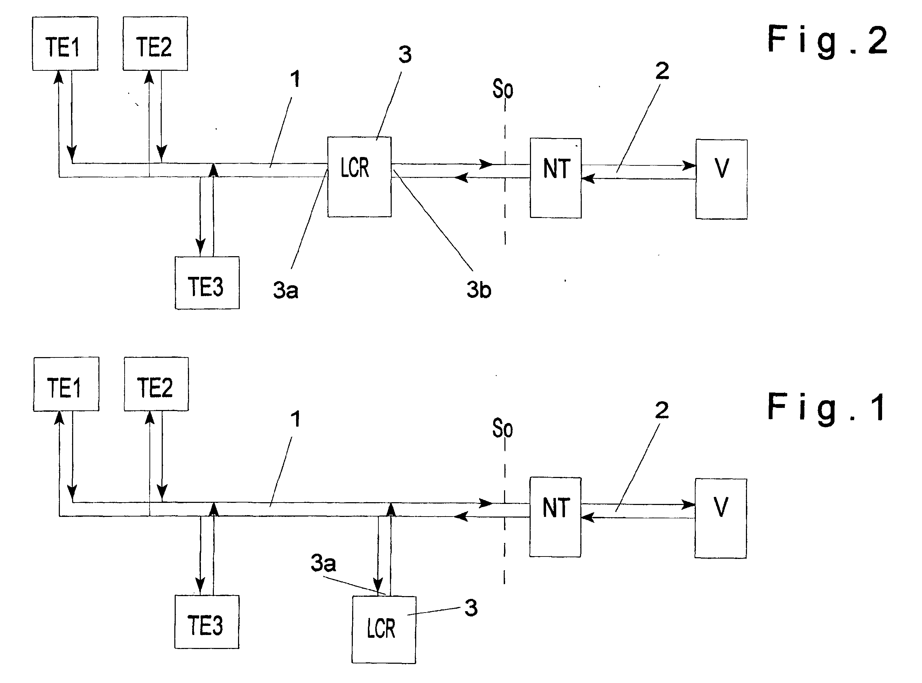

Figur 2 zeigt eine Anordnung an einem ISDN-Teilnehmeranschluß gemäß dem Stand der Technik, bei der drei Endgeräte TE1, TE2, TE3 über einen S₀-Bus 1 an einen Netzabschluß NT angeschlossen sind. Der Netzabschluß NT ist über eine Anschlußleitung 2 mit einer Vermittlungsstelle V eines Kommunikationsnetzes verbunden. Zwischen dem Netzabschluß NT und den Endgeräten befindet sich der standardisierte Bezugspunkt S, an dem eine physikalische, standardisierte Schnittstelle S₀ ausgebildet ist, an der die Endgeräte TE1, TE2, TE3 über den S₀-Bus 1 angeschlossen sind.

An der S₀-Schnittstelle werden je Übertragungsrichtung zwei Adernpaare verwendet, wobei in Figur 2 jedes Adernpaar als einfache Linie dargestellt ist. Der genaue Aufbau und die Funktionsweise derartiger ISDN-Anschlüße sind dem Fachmann bekannt, so daß hierauf nicht im einzelnen eingegangen wird.

Der S_{O}-Bus 1 ist zwischen dem Netzabschluß NT und den Endgeräten TE1, TE2, TE3 durch einen Least Cost Router 3 (im folgenden LCR genannt) unterbrochen. Der LCR 3 sucht anhand einer vorgegebenen Routing-Tabelle zwischen den Tarifen der verschiedenen Telekommunikations-Anbieter jeweils automatisch die kostengünstigste Wählverbindung heraus. Da der LCR 3 den S₀-Bus 1 unterbricht, weist er zwei ISDN-Ports 3a, 3b auf, an denen jeweils ein Computerchip zur Umsetzung der jeweiligen Signale angeordnet ist. Der Aufbau und die Funktionsweise derartiger LCR's 3 sind dem Fachmann ebenfalls bekannt.

Figur 1 zeigt eine erfindungsgemäße Anordnung, bei der der LCR 3 anders als bei der Anordnung gemäß Figur 2 den S₀-Bus 1 nicht unterbricht, sondern "einarmig" ausgebildet und wie die anderen Endgeräte TE1, TE2, TE3 über den S₀-Bus 1 an die S₀-Schnittstelle angeschlossen ist. Dementsprechend weist der LCR 3 nur einen ISDN-Port 3a und nur einen zugehörigen Computerchip auf. Die Hardwarekosten des LCR's 3 werden dadurch erheblich gesenkt.

Es wird darauf hingewiesen, daß die in Figur 1 dargestellte erfindungsgemäße Anordnung nicht auf einen ISDN-Anschluß am Bezugspunkt S beschränkt ist. Sofern an den Netzabschluß des ISDN-Anschlusses ein ISDN-Gerät mit vermittelnden Funktionen, etwa eine Telekommunikations-Anlage, angeschlossen ist, wird der LCR 3 an den Bezugspunkt T des zwischen Netzabschluß und Telekommunikationsanlage liegenden Netzabschnittes angeschlossen. Die nachfolgenden Ausführungen zum erfindungsgemäßen Least Cost Routing und Vermittlungsaufbau gelten in gleicher Weise auch für einen Anschluß des LCR 3 an eine T-Schnittstelle.

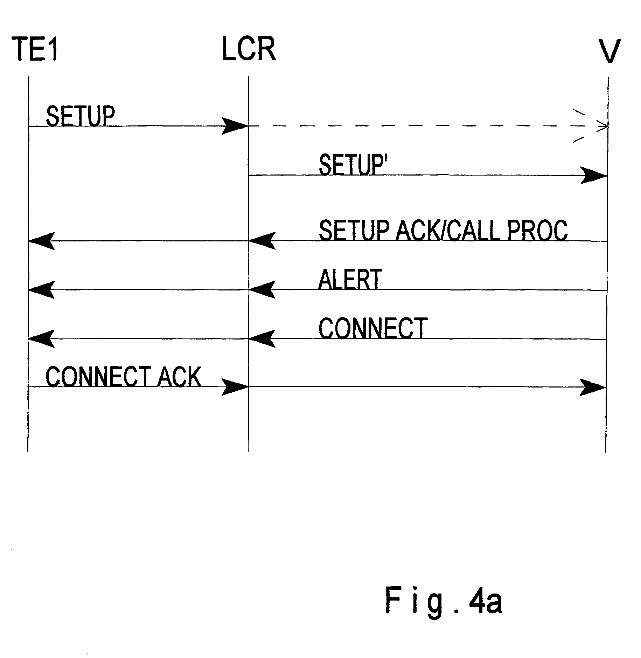

Ein erstes erfindungsgemäßes Verfahren zum Aufbau einer Verbindung von einem rufenden Endgerät zu einem gerufenen Endgerät wird nachfolgend anhand des Befehlsablaufs der Figur 4a beschrieben. Dabei sind die Signalisierungsbefehle des Endgeräts TE1 und die Signalisierungsbefehle des LCR bis zur Vermittlungsstelle V dargestellt. Die von der Vermittlungsstelle V weiter gesendeten bzw. die bei der Vermittlugsstelle V ankommenden Signalisierungsbefehle sind standardgemäß und daher in Fig. 4a nicht dargestellt.

Zunächst sendet ein betrachtetes Endgerät des ISDN-Anschlusses, beispielsweise das Endgerät TE1, zum Verbindungsaufbau in standardkonformer Weise ein SETUP-Protokolldatenelement an die Vermittlungsstelle V.

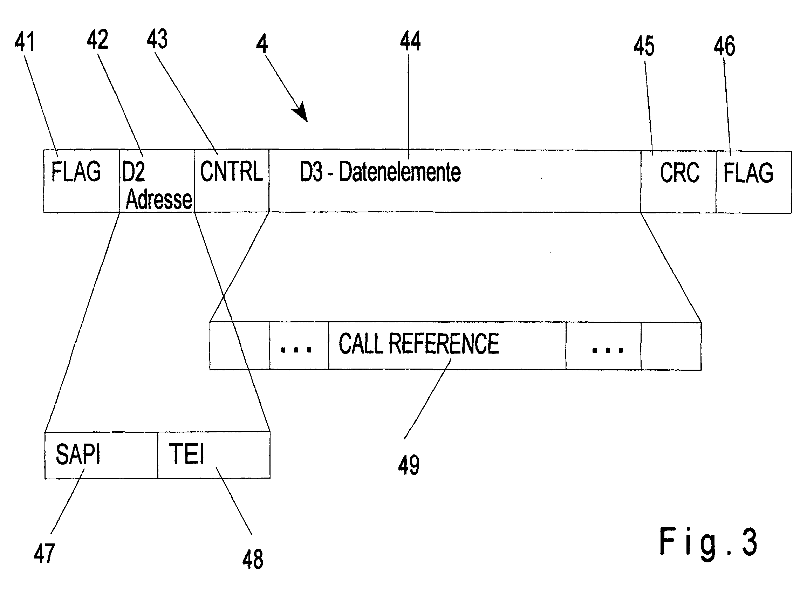

Wie in Figur 3 schematisch dargestellt, besteht das SETUP-Protokolldatenelement in der D2-Schicht des OSI-Referenzmodells aus einem Rahmen 4, der sich aus einem FLAG 41, einer D2-Adresse 42, einem Control-Byte 43, einem Steuerfeld 44 mit den Protokolldatenelementen der D3-Schicht, einem oder zwei Prüf-Bytes CRC 45 (CRC = CYCLIC REDUNDANCY CHECK) und einem endständigen FLAG 46 zusammensetzt. Die D2-Adresse 42 setzt sich aus einem SAPI-Oktett 47 und einem TEI-Oktett 48 zusammen.

Mit Hilfe des SAPI (Service Access Point Identifier) wird eine Beziehung zu einer D3-Instanz oder zu der Management-Instanz hergestellt und durch die Festlegung des SAPI-Wertes die Funktion des Rahmens 4 festgelegt. Der TEI 48 (Terminal Endpoint Identifier) legt eine Endeinrichtungs-Identität fest, durch die das Endgerät für die Vermittlungsstelle V eindeutig festgelegt wird.

Das Steuerfeld 44 weist D3-Protokolldatenelemente auf, wobei im vorliegenden Zusammenhang von Bedeutung ist, daß neben Protokolldatenelementen wie der Ursprungsadresse, der Zieladresse, der Subadresse und dem Kanalkennzeichen auch die Transaktionsnummer 49 (CALL REFERENCE) enthalten ist. Durch die Transaktionsnummer 49 wird einem Signalisierungsvorgang eine bestimmte Nummer zugeordnet. Der genaue Aufbau eines SETUP Protokolldatenelementes ist dem Fachmann bekannt.

Der LCR 3 hört durch Auswertung des standardgemäß vorgesehenen Echo-Kanals den SETUP des Endgerätes TE1, und dabei insbesondere die Transaktionsnummer CALL REFERENCE sowie die Endeinrichtungs-Identifikation TEI mit. Diese beiden Werte definieren gegenüber der Vermittlungsstelle V eindeutig Endgerät und Verbindungsvorgang, so daß sich der LCR durch ihre Angabe als Endgerät TE1 "ausgeben" kann.

Das in Fig. 4a beschriebene Verfahren geht davon aus, daß bereits im SETUP genügend Wahlinformationen enthalten sind, um anhand der Routing-Tabelle des LCR festzustellen, über welches Kommunikationsnetz eine Verbindung zum gerufenen Endgerät aufzubauen ist. Beispielsweise handelt es sich bei dem Endgerät TE1 um einen PC, der die gerufene Nummer gespeichert hat und vollständig im SETUP an die Vermittlungsstelle überträgt.

Nach Mithören der CALL REFERENCE, des TEI und der vorhandenen Wahlinformation im SETUP überschreibt der LCR 3 das Ende des SETUP-Protokolldatenelementes derart, daß die Vermittlungsstelle V keinen Signalisierungsbefehl des Endgerätes TE1 erkennt. Dies ist durch den gestrichelten Pfeil in Fig. 4a angedeutet.

Eine Überschreibung des SETUP-Protokolldatenelementes durch den LCR 3 erfolgt dabei derart, daß das Endgerät TE1 nicht bemerkt, daß die Überschreibung des SETUP erfolgte und eine Signalisierung zur Vermittlungsstelle nicht stattfand. Hierzu wird insbesondere das endständige FLAG-Byte 46 oder das Prüf-Byte CRC 45 des SETUP-Protokolldatenelementes 4 (vgl. Figur 3) überschrieben. Üblicherweise prüfen die Computerchips der Endgeräte TE1 das endständige FLAG-Byte 46 oder das Prüf-Byte CRC nicht, so daß die Überschreibung des Datenelementes durch den LCR 3 für das Endgerät TE1 unbemerkt bleibt. Dies ist von Vorteil, da ansonsten das Endgerät TE1 ein erneutes SETUP-Protokolldatenelement an die Vermittlungsstelle V senden würde.

Zum Überschreiben des endständigen FLAG-Bytes 46 und/oder des Prüf-Bytes CRC 45 des SETUP-Protokolldatenelementes 4 ist vorgesehen, das Byte durch NULL-Bits zu überschreiben.

Die Vermittlungsstelle V erkennt aufgrund der vom LCR 3 eingebrachten Fehler den vom Endgerät TE1 gesandten SETUP nicht als SETUP, so daß es keine Signalisierung vornimmt.

Der LCR 3 baut nun mit der mitgehörten TEI und der mitgehörten Call Reference eine Verbindung zu einem Einwahlsystem auf, das gemäß der internen Routing-Tabelle für die vorgesehene Verbindung ausgewählt wird. Hierzu wird ein modifiziertes SETUP' an die Vermittlungsstelle V gesandt, das zusätzlich zu den bisher vorliegenden Wahlinformationen die Einwahlnummer in das ausgewählte Telekommunikationsnetz ausweist und das von der Vermittlungsstelle V aufgrund der zusätzlichen Wahlinformation an das Einwahlsystem geroutet wird.

Das modifizierte SETUP' wird vom LCR 3 sogleich nach Überschreiben des SETUP des Endgerätes gesendet, ohne zuvor mindestens acht freie EINS-Bits auf dem D-Kanal abzuwarten, wie es standardgemäß vorgesehen ist. Hierdurch wird sichergestellt, daß das Endgerät nicht vor dem SETUP' des LCR 3 weitere Datenelemente an die Vermittlungsstelle senden kann. Das SETUP' Datenelement des LCR wird somit unmittelbar nach Überschreiben von Teilen des SETUP des Endgerätes durch NULL-Bits an die Vermittlungsstelle gesendet, und dabei lediglich durch ein übliches FLAG bestehend aus den Bits "01111110" eingeleitet.

Die Vermittlungsstelle quittiert das SETUP' des LCR mit einem SETUP ACKNOWLEDGE an das Endgerät TE1, von dem das SETUP' vermeintlich kam. Bei einem vollständigen Vorliegen der Zieladresse im SETUP erfolgt eine Quittierung z.B. mit einem CALL PROCEEDING Datenelement.

Zur Einfügung der Rufnummer des Einwahlsystems in das SETUP' ist bevorzugt vorgesehen, daß im Schicht 3 Feld "Zieladresse" (Destination Adress) die Nummer des Einwahlsystems als Vorspann zur Nummer des gerufenen Endsystems gesetzt wird. Alternativ ist es möglich, die Einwählnummer für das Einwahlsystem als Zieladresse zu setzen und als Ziel-Subadresse die Nummer des gerufenen Endgerätes. Im Einwahlsystem wird dann als neue Zieladresse die bisherige Ziel-Subadresse gesetzt und eine Verbindung zum gerufenen Endgerät aufgebaut.

Sofern die Zieladresse im SETUP des Endgerätes TE1 noch nicht vollständig vorlag, folgen ggf. noch INFO-Protokolldatenelemente (in Fig. 4a nicht dargestellt), die die restliche Zieladresse enthalten (etwa ziffernweise beim Telefon) und aufgrund des vorangegangenen SETUP' des LCR 3 ebenfalls von der Vermittlungsstelle V an das Einwahlsystem des ausgewählten Kommunikationsnetzes geroutet werden. Über das ausgewählte Kommunikationsnetz wird dann eine Verbindung zwischen dem rufenden und dem gerufenen Endgerät in an sich bekannter Weise unter Verwendung der Protokolldatenelemente ALERT, CONNECT und CONNECT ACKNOWLEDGE hergestellt.

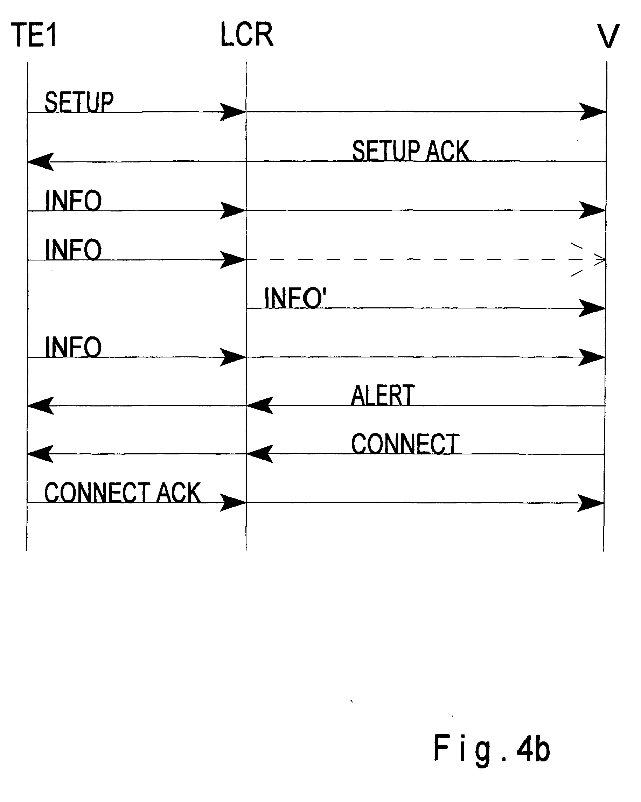

Das in Fig. 4a beschriebene Verfahren setzt voraus, daß im SETUP bereits genügend Wahlinformationen enthalten sind, um anhand der Routing-Tabelle einen geeigneten Carrier auszuwählen. Sofern dies nicht der Fall ist, wird ein alternatives, in Bezug auf Figur 4b beschriebene Verfahren eingesetzt.

Danach sendet das Endgerät TE1 zunächst ein SETUP-Datenelement an die Vermittlungsstelle V, die dies mit einem SETUP ACKNOWLEDGE quittiert. Durch Mithören erkennt der LCR dabei, daß noch nicht genügend Wahlinformationen vorliegen, um ein Routing vorzunehmen, und greift in das SETUP nicht ein. Er wartet weitere Wahlinformationen ab, die standardgemäß mit einem oder mehreren INFO-Protokolldatenelementen an die Vermittlungsstelle V gesandt werden.

Nach Vorliegen ausreichender Wahlinformationen zur Vornahme eines Routing überschreibt der LCR 3 das gerade betrachtete INFO Datenelement, so daß dieses von der Vermittlungsstelle nicht als solches erkannt wird. Dies erfolgt wie zu Fig. 4a in Bezug auf das SETUP Protokolldatenelement beschrieben. Nach Überschreiben des INFO Datenelementes wird, ohne zuvor acht freie EINS-Bits auf dem D-Kanal abzuwarten, ein modiziziertes INFO' Datenelement vom LCR 3 erzeugt und an die Vermittlungsstelle V gesandt.

Das modifizierte INFO' enthält dabei zusätzlich die Einwählnummer des ausgewählten Kommunikationsnetzes. Hierzu wird vor die im Datenelement bereits vorhandene(n) Wahlziffer(n) die Ziffernfolge der Einwahlnummer des ausgewählten Kommunikationsnetzes gesetzt, das INFO Datenelement also entsprechend überschrieben. Dieses modifizierte INFO'-Protokolldatenelement wird mit unveränderter Endeinrichtungs-Identifikation (TEI) und unveränderter Transaktionsnummer (CALL REFERENCE) an die Vermittlungsstelle V übertragen, die den Ruf daraufhin zum ausgewählten Kommunikationsnetz routet.

Weitere Wahlinformationen werden ggf. mit weiteren INFO Protokolldatenelementen vom Endgerät TE1 zur Vermittlungsstelle gesendet und aufgrund des vorgenommenen Routing ebenfalls an das Einwahlsystem des ausgewählten Kommunikationsnetzes weitergeleitet. Wenn die Zieladresse vollständig vorliegt, erfolgt in an sich bekannter Weise eine Verbindungsaufbau mit Hilfe der Protokolldatenelemente ALERT, CONNECT und CONNECT ACKNOWLEDGE.

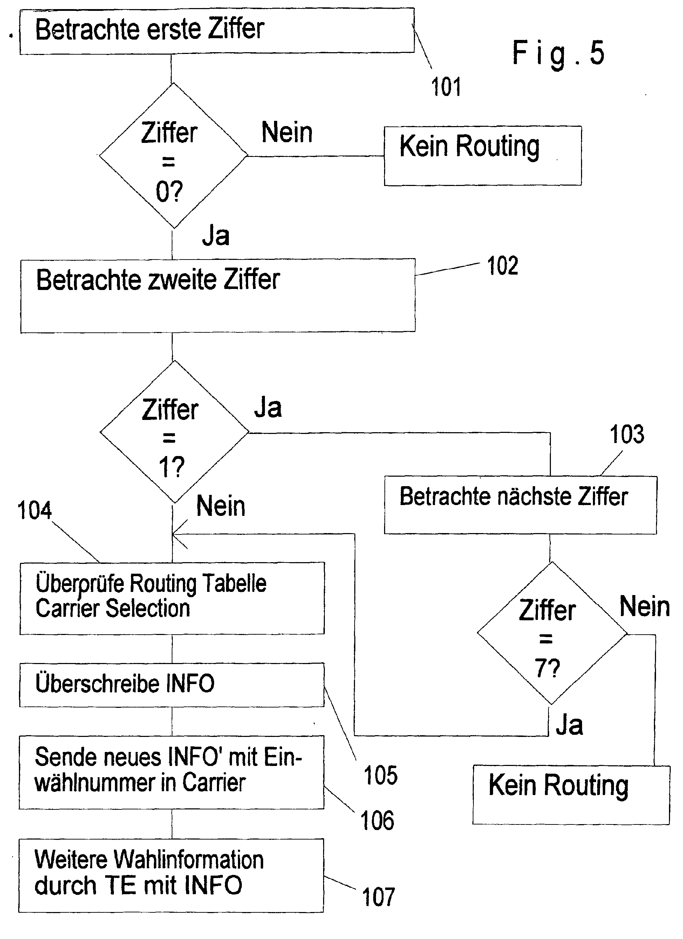

Figur 5 zeigt ein Ablaufdiagramm bei einem Verbindungsaufbau gemäß Figur 4b, das dieses Verfahren weiter verdeutlicht. Der LCR 3 ist dabei derart programmiert, daß bei lokalen Gesprächen ein Routing nicht stattfindet. Auch bei Ferngesprächen, die für den Endteilnehmer keine Kosten verursachen (etwa in Deutschland Rufnummer 0130 oder in den USA Rufnummer 1-800) erfolgt kein Routing. Bei anderen Rufnummern wählt der LCR anhand von internen Routing-Tabellen das kostengünstigste Kommunikationsnetz aus und stellt automatisch eine Verbindung zum Einwählsystem in das fragliche Kommunikationsnetz her. Für eine aufzubauende Verbindung zu einem Endgerät in Deutschland sei dabei angenommen, daß der LCR das Netz des Anbieters TALKLINE mit der Einwählnummer 01050 auswählt.

Im SETUP bzw. INFO Protokolldatenelement, das vom Endgerät TE1 zur Vermittlungsstelle V gesandt wird, prüft der LCR 3 durch Mithören auf dem Echo-Kanal die Wahlinformation. Dies sei am Beispiel der Nummer 0511-521643, die beispielsweise von einem Berliner Teilnehmer aus gewählt wird, verdeutlicht.

Das LCR 3 prüft in einem ersten Schritt 101, ob es sich bei der ersten Ziffer um eine Null handelt, denn nur in diesem Fall handelt es sich um ein zu routendes Ferngespräch. Sofern die ersten Ziffer keine 0 ist, greift der LCR 3 in den Verbindungsaufbau nicht ein.

Sofern die erste Ziffer gleich Null ist, prüft der LCR daraufhin in Schritt 102 die zweite Ziffer und stellt fest, ob es sich um eine Ziffer ungleich 1 handelt. Sofern es sich bei der Ziffer um eine 1 handelt, wird eine weitere Ziffer betrachtet (Schritt 103). Sofern die nächste Ziffer eine "7" ist, handelt es sich um eine aufzubauende Verbindung zu einem Handy (0171 für das D1-Netz und 0172 für das D2-Netz), die geroutet wird. Ansonsten erfolgt kein Routing, da davon auszugehen ist, daß es sich um eine für den Endteilnehmer kostenlose Verbindung (0130) oder eine andere Verbindung handelt, bei der ein Routing nicht sinnvoll ist.

Ergab die Prüfung in Schritt 102, daß die zweite Ziffer keine "1" ist, oder die Prüfung in Schritt 103, daß die dritte Ziffer eine "7" ist, so wird in Schritt 104 anhand der internen Routing Tabelle unter Berücksichtigung des bisherigen Wahlinformation ein Carrier ausgewählt.

Da nach Prüfung der ersten zwei bzw. ersten drei Ziffern genügend Wahlinformation zur Carrier Selection vorliegt, wird das gerade betrachetete INFO-Datenelement in Schritt 105, wie zuvor beschrieben, überschrieben, so daß es von der Vermittlungsstelle nicht als Datenelement erkannt wird. Stattdessen wird in Schritt 106 ein modifiziertes Datenelement INFO' an die Vermittlungsstelle V gesandt, das die Einwahlnummer des ausgewählten Carriers enthält. Weitere INFO-Datenelemente zur Vervollständigung der Zieladresse werden ggf. in Schritt 107 vom Endgerät an die Vermittlungsstelle V gesandt.

Im betrachteten Beispiel wurde eine Nummer in Hannover gewählt (0511). Es sei angenommen, daß das SETUP noch keine Wählziffern enthielt und die erste "0" der Vorwahl sowie die nachfolgende "5" vom Endgerät mit zwei INFO-Datenelementen an die Vermittlungsstelle V gesendet werden. Bereits bei der zweiten Ziffer "5" erkennt der LCR, daß eine Fernverbindung in Deutschland aufgebaut werden soll. Hierzu sieht die Routing-Tabelle im betrachteten Beispiel den Carrier TALKLINE mit der Einwahlnummer 01050 vor. Diese Nummer wird daher im neuen INFO' Datenelement des LCR 3 vor die Ziffer "5" der Vorwahl gesetzt. Da die "0" bereits im ersten INFO Datenelement gesendet wurde, weist das INFO' Datenelement die Ziffernfolge "1050 05" auf, wobei die Ziffern "1050 0" zugefügt wurden.

Die Vermittlungsstelle erkennt die Ziffernfolge 01050 dahingehend, daß sie den Verbindungswunsch an ein Einwahlsystem des gewählten Telekommunikationsnetzes (hier: TALKLINE) weiterleitet. Der weitere Verbindungsaufbau erfolgt dann standardgemäß.

Wenn eine Verbindung zu einem Mobilfunknetz aufgebaut wird (also die dritte gewählte Ziffer eine "7" ist), ist der Ablauf entsprechend, wobei jedoch im modifizierten INFO-Datenelement die Ziffern "050 01" eingefügt werden (im Beispiel von TALKLINE als Carrier), da die Ziffern "01" des Carriers bereits durch die vorangegangenen INFO Datenelemente übertragen wurden.

Es wird darauf hingewiesen, daß der Ablauf der Fig. 5 im wesentlichen auch das Verfahren der Fig. 4a beschreibt, mit dem Unterschied, daß die betrachteten Ziffern alle im SETUP enthalten sind, so daß dieses in Schritt 105 überschrieben und ein SETUP' in Schritt 106 an die Vermittlungsstelle gesandt wird.

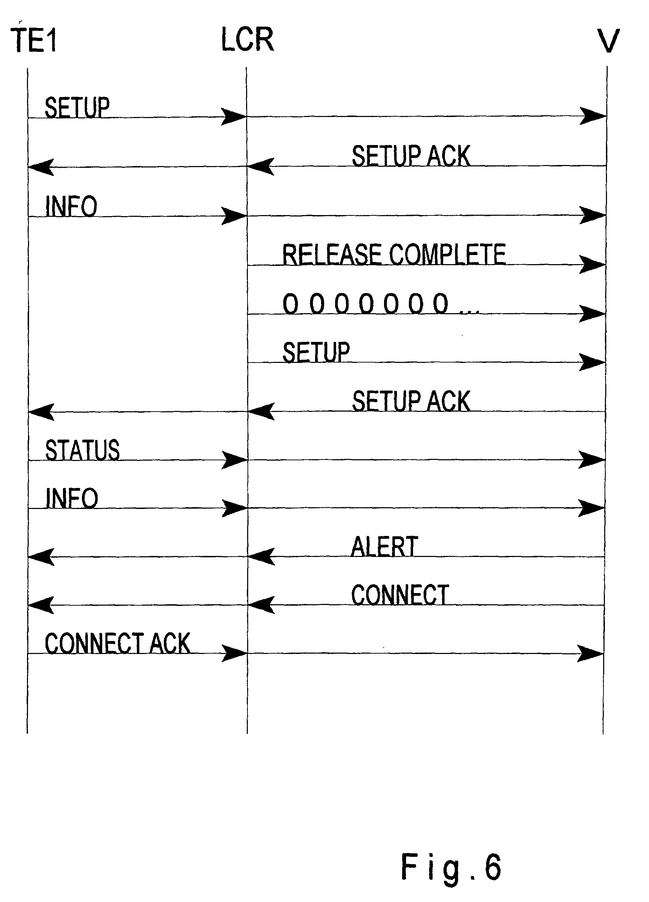

Figur 6 zeigt eine dritte Ausführungsform des erfindungsgemäßen Verfahrens. Zunächst hört, wie in bezug auf Figur 4a und Figur 3 beschrieben, der LCR 3 über den Echo-Kanal die Call Reference des Signalisierungsvorgangs und den TEI des rufenden Endgerätes TE1 mit. Die Vermittlungsstelle V quittiert den Verbindungswunsch mit einem Setup-Acknowlegde-Protokolldatenelement. Da das Setup-Protokolldatenelement im Normalfall beim Telefonieren keine Wahlinformationen enthält und der LCR 3 damit noch kein Routing vornehmen kann, werden zunächst die einzelnen Ziffern der Zieladresse durch ein oder mehrere INFO Protokolldatenelemente zur Vermittlungsstelle V übertragen.

Nachdem genügend Wahlinformationen durch den LCR mitgehört wurden und dieser anhand seiner Routing-Tabelle ein kostengünstiges Kommunikationsnetz ausgewählt hat, trennt der LCR unter Verwendung des mitgehörten TEI und der mitgehörten Call Reference durch ein RELEASE COMPLETE Protokolldatenelements die im Aufbau befindliche Verbindung des rufenden Endgerätes TE1. Dies bestätigt die Vermittlungsstelle auf der Ebene 2 mit einem RECEIVE READY Datenelement (in Figur 6 nicht dargestellt).

Damit das Endgerät TE1, das nichts davon "weiß", daß der Verbindungsaufbau gestoppt wurde, nicht weiterhin Wahlinformationen etwa mittels INFO Datenpaketen an die Vermittlungsstelle V sendet, die dies als einen Fehler auffassen würde, sendet das LCR 3 unmittelbar nach Senden des RELEASE COMPLETE Protokolldatenelements an die Vermittlungsstelle V eine Folge von 0-Bits oder ein sehr langes Datenpaket, wodurch der D-Kanal blockiert wird. So muß jedes am S₀-Bus angeschlossene Endgerät vor Senden von Protokolldatenelementen eine ununterbrochene Folge von mindestens 8 EINS-Bits abwarten.

Nach Erhalt des RECEIVE READY Datenelements von der Vermittlungsstelle sendet der LCR 3 mit dem mitgehörten TEI und der mitgehörten Call Reference des Endgerätes TE1 ein neues SETUP Protokolldatenelement an die Vermittlungsstelle V. Anschließend gibt der LCR 3 den D-Kanal wieder frei, worauf das Endgerät, das das auf das RELEASE COMPLETE des LCR 3 von der Vermittlungsstelle gesandte RECEIVE READY nicht erwartet hatte, eine Rücksetzprozedur (Reestablishment) der Ebene 2 durchführt.

Das neue Setup Protokolldatenelement weist dabei eine modifizierte Zieladresse auf, die zusätzlich die Einwählnummer in ein Einwahlsystem eines vom LCR 3 ausgesuchten kostengünstigen Kommunikationsnetzes enthält, so daß von der Vermittlungsstelle V ein Routing zum gewählten Kommunikationsnetz stattfindet.

Dabei ist wiederum wie in Bezug auf Fig. 4a erläutert bevorzugt vorgesehen, daß im neuen SETUP die Nummer des Einwahlsystems als Vorspann zur eigentlichen Nummer des gerufenen Endsystems gesetzt wird oder alternativ die Einwählnummer für das Einwahlsystem als Zieladresse und als Ziel-Subadresse die Nummer des gerufenen Endgerätes gesetzt wird.

Nach Senden eines neues SETUP durch den LCR erfolgt eine Quittierung durch die Vermittlungsstelle V mittels eines SETUP ACKNOWLEDGE. Das Endgerät TE1, das bereits zuvor ein SETUP ACKNOWLEDGE erhalten hatte, teilt der Vermittlungsstelle hierauf mit einem STATUS Datenelement mit, daß es sich bereits in dem Status befindet, den es nach dem ersten SETUP ACKNOWLEDGE angenommen hat. Zu weiteren Folgen führt das erneute Senden eines SETUP ACKNOWLEDGE an das Endgerät nicht.

Sofern die Zieladresse im SETUP des Endgerätes TE1 noch nicht vollständig vorliegt, folgen weitere INFO-Protokolldatenelemente, die die restliche Zieladresse enthalten, und die aufgrund des vorangegangenen SETUP des LCR 3 ebenfalls von der Vermittlungsstelle V an das Einwahlsystem des ausgewählten Kommunikationsnetzes geroutet werden. Über das ausgewählte Kommunikationsnetz wird dann eine Verbindung zwischen dem rufenden und dem gerufenen Endgerät in an sich bekannter Weise unter Verwendung der Protokolldatenelemente ALERT, CONNECT und CONNECT ACKNOWLEDGE hergestellt.

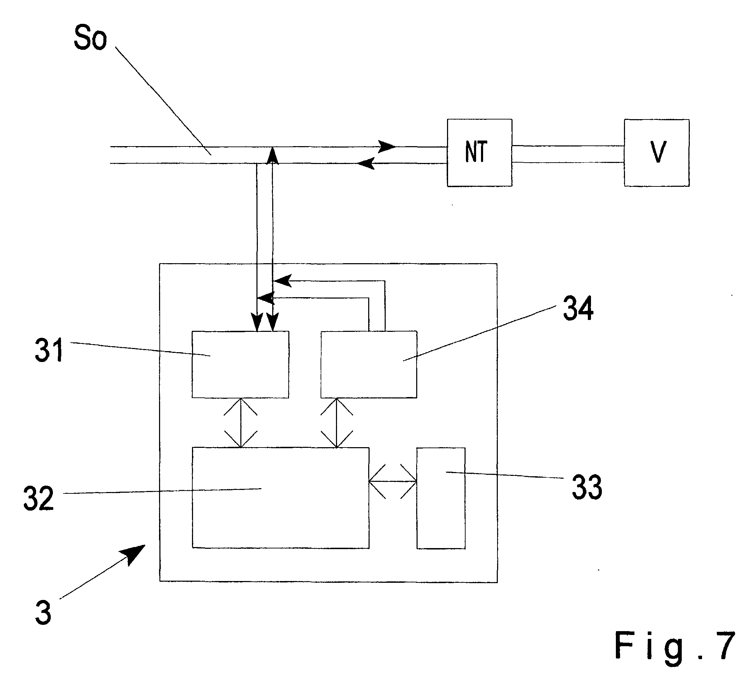

In Figur 7 ist schematisch ein erfindungsgemäßer LCR 3 dargestellt, der an den S₀-Bus einer S₀-Schnittstelle angeschlossen ist. Der LCR 3 weist Mittel 31 zum Mithören der Signalisierungsbefehle der einzelnen Endgeräte an die Vermittlungsstelle V und/oder an den Netzabschluß NT auf. Dabei handelt es sich etwa um eine Auswerteinheit, die den Echo-Kanal, der vom Netzabschluß NT oder der Vermittlungsstelle V gespiegelt wird, mithört. Alternativ kann auch vorgesehen sein, daß die Mithörmittel einen Empfänger für das Mithören in Senderichtung auf dem D-Kanal enthalten (in Fig. 7 durch einen Doppelpfeil zum S₀-Bus angedeutet).

Weiter weist der LCR 3 Steuermittel 32 auf, die unter Verwendung der mitgehörten Call Reference und des mitgehörten TEI und nach Prüfung einer Routing-Tabelle 33 ein modifiziertes SETUP Protokolldatenelement erzeugen und an die Vermittlungsstelle V senden, wobei das SETUP eine entsprechend dem ausgewählten Routing modifizierte Zieladresse aufweist.

Des weiteren weist der LCR 3 Mittel 34 zur Überschreibung eines zur Vermittlungssstelle V gesandten und/oder eines von der Vermittlungsstelle V ankommenden Protokolldatenelements auf. Derartige Mittel 34 bestehen aus einem an sich bekannten Schaltwerk, das D-Kanal Bits auf den D-Kanal ISDN-Rahmen aufsetzt. Die Besonderheit besteht darin, daß ein Aufsetzen von Bits auf den ISDN-Rahmen nicht davon abhängig ist, daß zuvor mindestens acht EINS-Bits auf dem D-Kanal vorliegen, wie es standardgemäß vorgesehen ist. Vielmehr erfolgt ein Aufsetzen von Bits auf den D-Kanal unter Durchbrechung der "acht EINS-Bits Regel", damit an die Vermittlungsstelle V gesandte Datenelemente in Echtzeit überschrieben und damit für diese unkenntlich gemacht werden können.

Es werden dabei bevorzugt sehr schnelle Chips eingesetzt, die bevorzugt eine Delay von lediglich 8 bits aufweisen, d.h. die Spanne zwischen einem mitgehörten Bit und dem aktuellen, vom Endgerät gesandten Bit beträgt lediglich 8 bits. Damit kann während des Sendens eines Protokolldatenelementes durch ein Endgerät dieses in geeigneten Teilen (insbesondere am endständiges FLAG-Byte) durch die Mittel 34 in Echtzeit überschrieben werden, wie etwa in Bezug auf Figur 4a und Figur 4b beschrieben.

Mit entsprechenden Schaltwerken ist es auch möglich, Protokolldatenelemente der Vermittlungsstelle an die Endgeräte zu überschreiben (etwa ein DISCONNECT).

Es wird darauf hingewiesen, daß die Einheiten 31 bis 34 des LCR 3 nicht notwendig als Hardware ausgebildet sind. Vielmehr können sie ebenfalls als Software in Verbindung mit einem Prozessor ausgeführt sein. Sofern eine Hardwareausbildung vorliegt, kann diese unter Beibehaltung der genannten Funktionalitäten auch anders als in Fig. 7 dargestellt verwirklicht sein.

Weiter wird darauf hingewiesen, daß der LCR 3 nicht notwenigerweise als selbstständiges Gerät ausgebildet ist, sondern auch in ein an den Bus angeschlossenes Endgerät TE1, TE2, TE3, insbesondere ein Telefon oder einen PC, integriert sein kann.

Die Verfahren der Figuren 4a, 4b und 6 können erfindungsgemäß auch als Mischformen auftreten, daß heißt es werden Verfahren eingesetzt, in denen sowohl eine im Aufbau befindliche Verbindung durch den LCR getrennt als auch Protokolldatenelemente durch den LCR überschrieben und für die Vermittlungsstelle unkenntlich gemacht werden werden.

Die Erfindung beschränkt sich in ihrer Anwendung nicht auf die vorstehend genannten Ausführungsbeispiele. Wesentlich für die Erfindung ist allein, daß mittels einer an die S/T-Schnittstelle angeschlossenen Vorrichtung eine Modifikation von signalisierungsbefehlen erfolgt, insbesondere eine gewählte Rufnummer derart modifiziert wird, daß statt des vorgegebenen Kommunikationsnetzes der Vermittlungsstelle ein anderes, für die aufzubauende Verbindung kostengünstigeres Kommunikationsnetz ausgewählt wird und ein entsprechendes Routing stattfindet.

## Patentansprüche

1. Verfahren zur Signalisierung zwischen einem Endgerät eines ISDN-Telekommunikationsanschlusses und einer Vermittlungsstelle eines Telekommunikationsnetzes, bei dem das Endgerät in standardkonformer Weise mindestens einen Signalisierungsbefehl an die Vermittlungsstelle sendet,
wobei
a) eine an die S/T Schnittstelle des ISDN-Telekommunikationsanschlusses angeschlossene Vorrichtung (3) die Transaktionsnummer des Signalisierungsbefehls (CALL REFERENCE) sowie die Endeinrichtungs-Identifikation (TEI) des Endgeräts mithört, ohne dabei die Verbindung des Endgeräts des ISDN-Telekommunikationsanschlusses zur S/T-Schnittstelle zu unterbrechen und
b) die Vorrichtung (3) unter Verwendung der mitgehörten Endeinrichtungs-Identifikation (TEI) und der mitgehörten Transaktionsnummer (CALL REFERENCE) Signalisierungsbefehle generiert und an die Vermittlungsstelle sendet, wobei Signalisierungsaufgaben des Endgerätes durch die Vorrichtung (3) wahrgenommen und/oder modifiziert werden.

2. Verfahren nach Anspruch 1, **dadurch gekennzeichnet, dass** das Verfahren zum Aufbau einer Verbindung von einem rufenden Endgerät zu einem gerufenen Endgerät eines beliebigen Telekommunikationsnetzes dient, bei dem zunächst in standardkonformer Weise vom rufenden Endgerät ein SETUP-Protokolldatenelement an die Vermittlungsstelle gesandt wird, wobei die mithörende Vorrichtung ein Least Cost Router ist, der ein für die aufzubauende Verbindung kostengünstiges Kommunikationsnetz auswählt, wobei
a) der Least Cost Router (3) den Verbindungswunsch des rufenden Endgeräts und dabei die Transaktionsnummer des Signalisierungsvorgangs (CALL REFERENCE) sowie die Endeinrichtungs-Identifikation (TEI) des rufenden Endgeräts mithört,
b) der Least Cost Router (3) nach Quittierung des Verbindungswunsches durch die Vermittlungsstelle (SETUP-ACKNOWLEGDE, CALL PROCEEDING) unter Verwendung der mitgehörten Endeinrichtungs-Identifikation (TEI) und der mitgehörten Transaktionsnummer (CALL REFERENCE) die im Aufbau befindliche Verbindung des rufenden Endgerätes trennt (RELEASE COMPLETE),
c) daraufhin mit der gleichen Endeinrichtungs-Identifikation (TEI) und der gleiche Transaktionsnummer (CALL REFERENCE) eine Verbindung zu einem Einwahlsystem in ein geeignetes Kommunikationsnetz aufbaut (SETUP), das der Least Cost Router (3) aufgrund der mithörten Wahlinformation und seiner Routing-Tabelle auswählt, und
d) über das gewählte Kommunikationsnetz eine Verbindung zwischen dem rufenden und dem gerufenen Endgerät hergestellt wird (ALERT; CONNECT).

3. Verfahren nach Anspruch 2, **dadurch gekennzeichnet, daß** der Least Cost Router (3) nach Trennen der im Aufbau befindliche Verbindung des rufenden Endgerätes den D-Kanal blockiert, so daß das Endgerät bis zum Senden eines neuen SETUP-Protokolldatenelementes durch den Least Cost Router (3) keine weiteren Signalisierungsbefehle an die Vermittlungsstelle senden kann.

4. Verfahren nach Anspruch 3, **dadurch gekennzeichnet, daß** der Least Cost Router (3) zum Blockieren des D-Kanals eine Folge von NULL-Bits oder ein sehr grosses Datenpaket sendet.

5. Verfahren nach mindestens einem der Ansprüche 2 bis 4, **dadurch gekennzeichnet, daß** ein SETUP-Protokolldatenelement vom rufenden Endsystem bereits ausgesendet wird, bevor die vollständige ISDN-Nummer des gerufenen Endsystems vorliegt, wobei die noch fehlenden Teile der Zieladresse durch ein oder mehrere INFO-Protokolldatenelemente zur Vermittlungsstelle übertragen werden, und wobei der Least Cost Router (3) die im Aufbau befindliche Verbindung des rufenden Endgerätes erst dann trennt, wenn genügend Wahlinformationen vorliegen, um anhand einer internen Routing-Tabelle ein geeignetes Kommunikationsnetz auszuwählen.

6. Verfahren nach Anspruch 1, **dadurch gekennzeichnet, dass** das Verfahren zum Aufbau einer Verbindung von einem rufenden Endgerät zu einem gerufenen Endgerät eines beliebigen Telekommunikationsnetzes dient, bei dem zunächst in standardkonformer Weise vom rufenden Endgerät ein SETUP-Protokolldatenelement an die Vermittlungsstelle gesandt wird, wobei die mithörende Vorrichtung ein Least Cost Router ist, der ein für die aufzubauende Verbindung kostengünstiges Kommunikationsnetz auswählt, wobei
a) der Least Cost Router (3) den Verbindungswunsch des rufenden Endgeräts und dabei die Transaktionsnummer des Signalisierungsvorgangs (CALL REFERENCE) sowie die Endeinrichtungs-Identifikation (TEI) des rufenden Endgeräts mithört,
b) der Least Cost Router (3) nach Vorliegen ausreichender Wahlinformationen zur Vornahme eines Routing ein Protokolldatenelement (SETUP, INFO) des Endgerätes derart überschreibt, daß die Vermittlungsstelle den Signalisierungsbefehl (SETUP, INFO) des Endgerätes nicht erkennt,
c) der Least Cost Router (3) mit der gleichen Endeinrichtungs-Identifikation (TEI) und der gleiche Transaktionsnummer (CALL REFERENCE) ein modifiziertes Protokolldatenelement (SETUP', INFO'), das zusätzlich die Einwählnummer eines ausgewählten Kommunikationsnetzes enthält, erzeugt und dieses Protokolldatenelement an die Vermittlungsstelle überträgt, die den Ruf daraufhin zum ausgewählten Kommunikationsnetz routet und
d) über das gewählte Kommunikationsnetz eine Verbindung zwischen dem rufenden und dem gerufenen Endgerät hergestellt wird (ALERT; CONNECT).

7. Verfahren nach Anspruch 6, **dadurch gekennzeichnet, daß** der Least Cost Router (3) das SETUP-Protokolldatenelement des Endgerätes überschreibt, so daß die Vermittlungsstelle den SETUP-Signalisierungsbefehl des Endgerätes nicht erkennt, und daraufhin mit der gleichen Endeinrichtungs-Identifikation (TEI) und der gleichen Transaktionsnummer (CALL REFERENCE) mittels eines modifizierten SETUP-Protokolldatenelementes (SETUP') eine Verbindung zu einem Einwahlsystem in ein geeignetes Kommunikationsnetz aufbaut, das der Least Cost Router (3) aufgrund der mithörten Wahlinformation und seiner Routing-Tabelle auswählt.

8. Verfahren nach Anspruch 6, **dadurch gekennzeichnet, daß** der Least Cost Router (3) nach Vorliegen ausreichender Wahlinformationen zur Vornahme eines Routing ein sich an das SETUP-Protokolldatenelement anschliessendes INFO-Protokolldatenelement überschreibt, so daß die Vermittlungsstelle den Signalisierungsbefehl (INFO) des Endgerätes nicht erkennt, und daraufhin mit der gleichen Endeinrichtungs-Identifikation (TEI) und der gleiche Transaktionsnummer (CALL REFERENCE) ein modifiziertes INFO-Protokolldatenelement, das die Einwählnummer eines ausgewählten Kommunikationsnetzes zusätzlich enthält, erzeugt und dieses INFO-Protokolldatenelement an die Vermittlungsstelle überträgt.

9. Verfahren nach Anspruch 8, **dadurch gekennzeichnet, daß** im modifizierten INFO-Protokolldatenelement vor die im Datenelement bereits vorhandenen Wahlziffern die Ziffernfolge der Einwahlnummer in das ausgewählte Kommunikationsnetz gesetzt wird.

10. Verfahren nach Anspruch mindestens einem der Ansprüche 6 bis 9, **dadurch gekennzeichnet, daß** eine Überschreibung des Protokolldatenelements (SETUP, INFO) in Teilen des Datenelements erfolgt, die vom Endgerät nicht kontrolliert werden, so daß das Endgerät die Überschreibung und die nicht erfolgte Signalisierung zur Vermittlungsstelle nicht bemerkt.

11. Verfahren nach Anspruch 10, **dadurch gekennzeichnet, daß** eine Überschreibung des endständigen FLAG-Bytes (FLAG) und/oder eines Prüf-Bytes (CRC) des Protokolldatenelementes (SETUP, INFO) erfolgt.

12. Verfahren nach mindestens einem der Ansprüche 6 bis 11, **dadurch gekennzeichnet, daß** nach Überschreibung des Signalisierungsbefehls (SETUP, INFO) des Endgerätes ein modifizierter Signalisierungsbefehl (SETUP', INFO') durch den Least Cost Router (3) an die Vermittlungsstelle (V) gesandt wird, ohne zuvor mindestens acht EINS-Bits auf dem D-Kanal abzuwarten.

13. Verfahren nach mindestens einem der Ansprüche 6 bis 12, **dadurch gekennzeichnet, daß** der Least Cost Router (3) für den Fall, daß sich das angewählte Einwahlsystem im Besetzt-Zustand befindet, sich bei einem erneuten Verbindungsversuch des Endgerätes nicht in den Verbindungsaufbau des Endgerätes einschaltet.

14. Verfahren nach mindestens einem der Ansprüche 6 bis 12, **dadurch gekennzeichnet, daß** der Least Cost Router (3) vor Aufbau einer Verbindung zu einem Einwahlsystem in ein geeignetes Kommunikationsnetz bei dem Einwahlsystem anfragt, ob dieses ein Gespräch annehmen kann oder aber sich im Besetzt-Zustand befindet, und nur im ersten Fall ein SETUP-Protokolldatenelement an das Einwahlsystem sendet.

15. Verfahren nach mindestens einem der Ansprüche 2 bis 12, **dadurch gekennzeichnet, daß** der Least Cost Router (3) von der Vermittlungsstelle kommende Signalisierungsbefehle überschreibt, so daß sie vom Endgerät nicht als solche erkannt werden, insbesondere ein von der Vermittlungsstelle im Besetzt-Fall gesandtes DISCONNECT Protokolldatenelement überschreibt, und daraufhin ein alternatives Routing durchführt.

16. Verfahren nach mindestens einem der Ansprüche 2 bis 15, **dadurch gekennzeichnet, daß** der Least Cost Router (3) über die Auswertung des Echo-D-Kanals die Transaktionsnummer des Signalisierungsvorgangs (CALL REFERENCE) sowie die Endeinrichtungs-Identifikation (TEI) des rufenden Endgeräts mithört.

17. Verfahren nach mindestens einem der Ansprüche 2 bis 16, **dadurch gekennzeichnet, daß** der Least Cost Router (3) über Auswertung des D-Kanals die Transaktionsnummer des Signalisierungsvorgangs (CALL REFERENCE) sowie die Endeinrichtungs-Identifikation (TEI) des rufenden Endgeräts mithört, wobei der Least Cost Router (3) einen eigenen Empfänger für das Mithören in Senderichtung aufweist.

18. Verfahren nach mindestens einem der Ansprüche 2 bis 17, **dadurch gekennzeichnet, daß** der Least Cost Router (3) zum Aufbau einer Verbindung zu einem Einwahlsystem eines geeigneten Kommunikationsnetzes eine modifizierte Zieladresse im SETUP-Protokolldatenelement verwendet, die sowohl die Nummer des Einwahlsystems als auch die Nummer des gerufenen Endgerätes enthält.

19. Verfahren nach mindestens einem der Ansprüche 2 bis 18, **dadurch gekennzeichnet, daß**
a) der Least Cost Router (3) zum Aufbau einer Verbindung zu einem Einwahlsystem eines geeigneten Kommunikationsnetzes im SETUP-Protokolldatenelement als Zieladresse die Einwählnummer für das Einwahlsystem und als Ziel-Subadresse die Nummer des gerufenen Endgeräts setzt und
b) das Einwahlsystem als neue Zieladresse die bisherige Ziel-Subadresse setzt und eine Verbindung zum gerufenen Endgerät aufbaut.

20. Vorrichtung zur Durchführung des Verfahrens nach Anspruch 1,
mit
a) Mittel (31) zum Mithören der Signalisierungsbefehle der einzelnen Endgeräte (TE1, TE2, TE3) an die Vermittlungsstelle (V) und/oder den Netzabschluss (NT) ohne dabei die Verbindung anderer Endgeräte des ISDN-Telekommunikationsanschlusses zur S/T-Schnittstelle zu unterbrechen und
b) Steuermittel (32), die nach Mithören der Transaktionsnummer eines Signalisierungsbefehls (CALL REFERENCE) sowie der Endeinrichtungs-Identifikation (TEI) des Endgeräts (TE1, TE2, TE3) bestimmte Signalisierungsbefehle an die Vermittlungsstelle (V) unter Verwendung der mitgehörten Transaktionsnummer (CALL REFERENCE) und der mitgehörten Endeinrichtungs-Identifikation (TEI) senden.

21. Vorrichtung nach Anspruch 22, **dadurch gekennzeichnet, daß** die Vorrichtung (3) des weiteren Mittel (33) zur Überschreibung eines zur Vermittlungsstelle (V) abgehenden und/oder eines von der Vermittlungsstelle (V) ankommenden Protokolldatenelementes aufweist.

22. Vorrichtung nach einem der Ansprüche 20 oder 21, **dadurch gekennzeichnet, daß** die Vorrichtung die an die S/T Schnittstelle des ISDN-Anschlusses angeschlossen ist, wobei des weiteren mindestens ein Endgerät an die S/T Schnittstelle des ISDN-Anschlusses angeschlossen ist

23. Vorrichtung nach Anspruch 22, **dadurch gekennzeichnet, daß** die Vorrichtung (3) in ein an den Bus (1) angeschlossenes Endgerät (TE1, TE2, TE3), insbesondere ein Telefon oder einen PC, integriert ist.

## Claims

1. Method for signalling between a terminal of an ISDN telecommunication connection and a switching centre in a telecommunication network, in which the terminal transmits at least one signalling command to the switching centre, in a manner which complies with a standard, with
a) an apparatus (3) which is connected to the S/T interface of the ISDN telecommunication connection monitoring the transaction number of the signalling command (CALL REFERENCE) and the terminal equipment identification (TEI) of the terminal without in the process having to interrupt the connection of the terminal of the ISDN telecommunication connection to the S/T interface, and
b) the apparatus (3) generating signalling commands using the monitored terminal equipment identification (TEI) and the monitored transaction number (CALL REFERENCE) and sending the signalling commands to the switching centre, with signalling tasks of the terminal being carried out and/or modified by the apparatus (3).

2. Method according to Claim 1, **characterized in that** the method is used for setting up a connection from a calling terminal to a called terminal in any desired telecommunication network, in which a SETUP protocol data element is first of all sent from the calling terminal to the switching centre in a manner which complies with the standard, and with the monitoring apparatus being a least cost router which selects a cost-effective communication network for the connection to be set up, with
a) the least cost router (3) monitoring the connection demand from the calling terminal and in the process monitoring the transaction number of the signalling process (CALL REFERENCE) as well as the terminal equipment identification (TEI) of the calling terminal,
b) after acknowledgement of the connection demand by the switching centre (SETUP-ACKNOWLEDGE, CALL PROCEEDING) the least cost router (3) disconnecting the connection that has been set up for the calling terminal (RELEASE COMPLETE) using the monitored terminal equipment identification (TEI) and the monitored transaction number (CALL REFERENCE),
c) a connection to a dialling system then being set up in a suitable communication network (SETUP) which the least cost router (3) selects on the basis of the monitored dialling information and its routing table, using the same terminal equipment identification (TEI) and the same transaction number (CALL REFERENCE), and
d) a connection between the calling terminal and the called terminal being set up (ALERT; CONNECT) via the selected communication network.

3. Method according to Claim 2, **characterized in that**, after disconnection of the connection that has been set up for the calling terminal, the least cost router (3) blocks the D channel, so that the terminal cannot send any further signalling commands to the switching centre until the least cost router (3) has sent a new SETUP protocol data element.

4. Method according to Claim 3, **characterized in that** the least cost router (3) sends a sequence of ZERO bits or a very large data packet in order to block the D channel.

5. Method according to at least one of Claims 2 to 4, **characterized in that** a SETUP protocol data element is sent by the calling terminal system even before the complete ISDN number of the called terminal system is available, with the parts of the destination address which are still missing being transmitted by means of one or more INFO protocol data elements to the switching centre, and with the least cost router (3) not disconnecting the connection which has been set up for the calling terminal until sufficient dialling information is available to select a suitable communication network on the basis of an internal routing table.

6. Method according to Claim 1, **characterized in that** the method is used for setting up a connection from a calling terminal to a called terminal in any desired telecommunication network, in which a SETUP protocol data element is first of all sent from the calling terminal to the switching centre in a manner which complies with a standard, and with the monitoring apparatus being a least cost router which selects a cost-effective communication network for the connection to be set up, with
a) the least cost router (3) monitoring the connection demand from the calling terminal and in the process monitoring the transaction number of the signalling process (CALL REFERENCE) as well as the terminal equipment identification (TEI) of the calling terminal,
b) once sufficient dialling information is available to carry out a routing process, the least cost router (3) overwriting a protocol data element (SETUP, INFO) of the terminal such that the switching centre does not identify the signalling command (SETUP, INFO) from the terminal,
c) the least cost router (3) producing a modified protocol data element (SETUP', INFO'), which additionally contains the dialling number of a selected communication network, using the same terminal equipment identification (TEI) and the same transaction number (CALL REFERENCE), and transmitting this protocol data element to the switching centre, which then routes the call to the selected communication network, and
d) a connection between the calling terminal and the called terminal being set up (ALERT; CONNECT) via the selected communication network.

7. Method according to Claim 6, **characterized in that** the least cost router (3) overwrites the SETUP protocol data element of the terminal, so that the switching centre does not identify the SETUP signalling command from the terminal, and then sets up a connection to a dialling system to a suitable communication network by means of a modified SETUP protocol data element (SETUP') using the same terminal equipment identification (TEI) and the same transaction number (CALL REFERENCE), which communication network is selected by the least cost router (3) on the basis of the monitored dialling information and its routing table.

8. Method according to Claim 6, **characterized in that**, once sufficient dialling information is available to carry out a routing process, the least cost router (3) overwrites an INFO protocol data element which is adjacent to the SETUP protocol data element, such that the switching centre does not identify the signalling command (INFO) from the terminal, and then produces a modified INFO protocol data element, which additionally contains the dialling number of a selected communication network, using the same terminal equipment identification (TEI) and the same transaction number (CALL REFERENCE), and transmits this INFO protocol data element to the switching centre.

9. Method according to Claim 8, **characterized in that** the character string of the dialling number to the selected communication network is set in the modified INFO protocol data element before the dialling digits which are already present in the data element.

10. Method according to at least one of Claims 6 to 9, **characterized in that** the protocol data element (SETUP, INFO) is overwritten in parts of the data element which are not monitored by the terminal, so that the terminal does not notice the overwriting and the lack of signalling to the switching centre.

11. Method according to Claim 10, **characterized in that** the final FLAG byte (FLAG) and/or a check byte (CRC) in the protocol data element (SETUP, INFO) are/is overwritten.

12. Method according to at least one of Claims 6 to 11, **characterized in that**, after overwriting of the signalling command (SETUP, INFO) from the terminal, a modified signalling command (SETUP', INFO') is sent by the least cost router (3) to the switching centre (V) without having to wait in advance for at least eight ONE bits on the D channel.

13. Method according to at least one of Claims 6 to 12, **characterized in that** in the situation in which the selected dialling system is busy, the least cost router (3) does not start the process of setting up the connection for the terminal when the terminal makes another connection attempt.

14. Method according to at least one of Claims 6 to 12, **characterized in that**, before setting up a connection to a dialling system to a suitable communication network, the least cost router (3) checks with the dialling system to determine whether it can accept a call or else is busy, and sends a SETUP protocol data element to the dialling system only in the first case.

15. Method according to at least one of Claims 2 to 12, **characterized in that** the least cost router (3) overwrites signalling commands coming from the switching centre, so that they are not identified as such by the terminal, in particular overwriting a DISCONNECT protocol data element which is sent by the switching centre if it is busy, and then carries out an alternative routing process.

16. Method according to at least one of Claims 2 to 15, **characterized in that** the least cost router (3) uses the evaluation of the echo-D channel to monitor the transaction number of the signalling process (CALL REFERENCE) as well as the terminal equipment identification (TEI) of the calling terminal.

17. Method according to at least one of Claims 2 to 16, **characterized in that** the least cost router (3) uses evaluation of the D channel to monitor the transaction number of the signalling process (CALL REFERENCE) as well as the terminal equipment identification (TEI) of the calling terminal, with the least cost router (3) having a seperate receiver for monitoring in the transmission direction.

18. Method according to at least one of Claims 2 to 17, **characterized in that** in order to set up a connection to a dialling system for a suitable communication network, the least cost router (3) uses a modified destination address in the SETUP protocol data element, which contains not only the number of the dialling system but also the number of the called terminal.

19. Method according to at least one of Claims 2 to 18, **characterized in that**
a) in order to set up a connection to a dialling system for a suitable communication network, the least cost router (3) sets the dialling number for the dialling system as the destination address and the number of the called terminal as the destination subaddress in the SETUP protocol data element, and,
b) the dialling system sets the previous destination subaddress as the new destination address, and sets up a connection to the called terminal.

20. Apparatus for carrying out the method according to Claim 1,
having
a) means (31) for monitoring the signalling commands from the individual terminals (TE1, TE2, TE3) to the switching centre (V) and/or the network termination (NT) without in the process having to interrupt the connection of other terminals of the ISDN telecommunication connection to the S/T interface, and
b) control means (32) which, after monitoring of the transaction number of a signalling command (CALL REFERENCE) as well as the terminal equipment identification (TEI) of the terminal (TE1, TE2, TE3), send specific signalling commands to the switching centre (V) using the monitored transaction number (CALL REFERENCE) and the monitored terminal equipment identification (TEI).

21. Apparatus according to Claim 20, **characterized in that** the apparatus (3) furthermore has means (33) for overwriting an outgoing protocol data element to the switching centre (V) and/or an incoming protocol data element from the switching centre (V).

22. Apparatus according to one of Claims 20 or 21, **characterized in that** the apparatus is connected to the S/T interface of the ISDN connection, with at least one terminal furthermore being connected to the S/T interface of the ISDN connection.

23. Apparatus according to Claim 22, **characterized in that** the apparatus (3) is integrated in a terminal (TE1, TE2, TE3) which is connected to the bus (1), in particular in a telephone or a PC.

## Revendications

1. Procédé pour la signalisation entre un terminal d'une terminaison RNIS et un central de commutation d'un réseau de télécommunication, dans lequel le terminal envoie d'une manière conforme au standard au moins un ordre de signalisation au central de commutation, dans lequel:
a) un dispositif (3) raccordé à l'interface S/T de la terminaison RNIS écoute le numéro de transaction de l'ordre de signalisation (CALL REFERENCE) ainsi que l'identification de dispositif terminal (TEI) du terminal, sans pour autant interrompre la liaison du terminal de la terminaison RNIS vers l'interface S/T, et
b) le dispositif (3) génère, en utilisant l'identification du dispositif terminal (TEI) écouté et le numéro de transaction écouté (CALL REFERENCE), des ordres de signalisation et les envoie au central de commutation, des tâches de signalisation du terminal étant perçues et/ou modifiées par le dispositif (3).

2. Procédé selon la revendication 1, **caractérisé en ce que** le procédé sert à l'établissement d'une liaison d'un terminal appelant vers un terminal appelé de n'importe quel réseau de télécommunication, dans lequel d'abord de manière conforme au standard est envoyé du terminal appelant un élément de données de protocole SETUP au central de commutation, le dispositif d'écoute étant un Least Cost Router, qui sélectionne un réseau de communication économique pour une liaison à établir, dans lequel
a) le Least Cost Router (3) écoute le souhait de liaison du terminal appelant et ainsi le numéro de transaction du procédé de signalisation (CALL REFERENCE) ainsi que l'identification du dispositif terminal (TEI) de l'appareil appelant,
b) le Least Cost Router (3), après validation du souhait de liaison par le central de commutation (SETUP ACKNOWLEDGE, CALL REFERENCE), sépare, en utilisant l'identification du dispositif terminal (TEI) écoutée et du numéro de transaction écouté (CALL REFERENCE), la liaison du terminal appelant se trouvant en établissement (RELEASE COMPLETE),
c) ensuite avec la même identification de dispositif terminal (TEI) et le même numéro de transaction (CALL REFERENCE) établit une liaison vers un système d'accès dans un réseau approprié (SETUP), que sélectionne le Least Cost Router (3) sur la base du signal d'adresse écouté et de son tableau de routage, et
d) est créée par le réseau de communication sélectionné une liaison entre le terminal appelant et le terminal appelé (ALERT ; CONNECT).

3. Procédé selon la revendication 2, **caractérisé en ce que** le Least Cost Router (3), après séparation de la liaison du terminal appelant se trouvant en établissement, bloque le canal D, de telle sorte que le terminal ne peut envoyer, jusqu'à l'envoi d'un nouvel élément de données de protocole SETUP par le Least Cost Router (3), aucun autre ordre de signalisation au central de commutation.

4. Procédé selon la revendication 3, **caractérisé en ce que** le Least Cost Router (3) envoie pour bloquer le canal D une suite de bits ZERO ou un très grand paquet de données.

5. Procédé selon au moins l'une quelconque des revendications 2 à 4, **caractérisé en ce qu'**un élément de données de protocole SETUP est déjà envoyé par le système terminal appelant, avant que le numéro RNIS complet du système terminal appelé soit présent, les parties encore manquantes de l'adresse cible étant transmises par un ou plusieurs éléments de données de protocole INFO au central de commutation, et le Least Cost Router (3) séparant la liaison du terminal appelant se trouvant en établissement seulement lorsque suffisamment de signaux d'adresse sont présents pour sélectionner à l'aide d'un tableau de routage interne un réseau de communication approprié.

6. Procédé selon la revendication 1, **caractérisé en ce que** le procédé sert à l'établissement d'une liaison d'un terminal appelant vers un terminal appelé de n'importe quel réseau de télécommunication, dans lequel d'abord de manière conforme au standard est envoyé du terminal appelant un élément de données de protocole SETUP au central de commutation, le dispositif d'écoute étant un Least Cost Router qui sélectionne pour la liaison à établir un réseau de communication économique, dans lequel
a) le Least Cost Router (3) écoute le souhait de liaison du terminal appelant et ainsi le numéro de transaction du procédé de signalisation (CALL REFERENCE) ainsi que l'identification de dispositif terminal (TEI) du terminal appelant,
b) le Least Cost Router (3), après la présence de signaux d'adresse suffisants pour effectuer un routage, écrase un élément de données de protocole (SETUP, INFO) du terminal de manière à ce que le central de commutation ne reconnaisse pas l'ordre de signalisation (SETUP, INFO) du terminal,
c) le Least Cost Router (3), avec la même identification de dispositif terminal (TEI) et le même numéro de transaction (CALL REFERENCE), produit un élément de données de protocole (SETUP', INFO'), qui contient en plus le numéro d'accès d'un réseau de communication sélectionné, et transmet cet élément de données de protocole au central de commutation, qui achemine l'appel ensuite vers le réseau de communication sélectionné et
d) par le réseau de communication sélectionné est créée une liaison entre le terminal appelant et le terminal appelé (ALERT ; CONNECT).

7. Procédé selon la revendication 6, **caractérisé en ce que** le Least Cost Router (3) écrase l'élément de données de protocole SETUP du terminal de telle sorte que le central de commutation ne reconnaisse pas l'ordre de signalisation SETUP du terminal, et ensuite établit avec la même identification de dispositif terminal (TEI) et le même numéro de transaction (CALL REFERENCE) au moyen d'un élément de données de protocole SETUP modifié (SETUP') une liaison vers un système d'accès dans un réseau de communication approprié, que sélectionne le Least Cost Router (3) sur la base du signal d'adresse écouté et de son tableau de routage.

8. Procédé selon la revendication 6, **caractérisé en ce que** le Least Cost Router (3), après la présence de signaux d'adresse suffisants pour effecteur un routage, écrase un élément de données de protocole INFO se rattachant à l'élément de données de protocole SETUP de telle sorte que le central de commutation ne reconnaisse pas l'ordre de signalisation (INFO) du terminal, et ensuite, avec la même identification de dispositif terminal (TEI) et le même numéro de transaction (CALL REFERENCE), produit un élément de données de protocole INFO modifié, qui contient en plus le numéro d'accès d'un réseau de communication sélectionné, et transmet cet élément de données de protocole INFO au central de commutation.

9. Procédé selon la revendication 8, **caractérisé en ce que** dans l'élément de données de protocole INFO modifié est placée, avant les chiffres de numérotation déjà présents dans l'élément de données, la suite de chiffres du numéro d'accès dans le réseau de communication sélectionné.

10. Procédé selon au moins l'une quelconque des revendications 6 à 9, **caractérisé en ce qu'**un écrasement de l'élément de données de protocole (SETUP, INFO) s'effectue en parties de l'élément de données, qui ne sont pas contrôlées par le terminal, de telle sorte que le terminal ne remarque pas l'écrasement et la signalisation non effectuée vers le central de commutation.

11. Procédé selon la revendication 10, **caractérisé en ce que** s'effectue un écrasement du FLAG-byte terminal (FLAG) et/ou d'un byte de vérification (CRC) de l'élément de données de protocole (SETUP, INFO).

12. Procédé selon au moins l'une quelconque des revendications 6 à 11, **caractérisé en ce qu'**après l'écrasement de l'ordre de signalisation (SETUP, INFO) du terminal est envoyé un ordre de signalisation modifié (SETUP', INFO') par le Least Cost Router (3) au central de commutation (V), sans avoir attendu auparavant au moins huit bits UN sur le canal D.

13. Procédé selon au moins l'une quelconque des revendications 6 à 12, **caractérisé en ce que** le Least Cost Router (3), pour le cas où le système d'accès sélectionné se trouverait à l'état occupé, ne se commute pas dans l'établissement du terminal lors d'un nouvel essai de liaison du terminal.

14. Procédé selon au moins l'une quelconque des revendications 6 à 12, **caractérisé en ce que** Least Cost Router (3), avant l'établissement d'une liaison vers un système d'accès dans un réseau de communication approprié, demande dans le système d'accès si celui-ci peut accepter une conversation ou, s'il se trouve à l'état occupé, et seulement dans le premier cas envoie un élément de données de protocole SETUP au système d'accès.

15. Procédé selon au moins l'une quelconque des revendications 2 à 12, **caractérisé en ce que** Least Cost Router (3) écrase les ordres de signalisation venant du central de commutation de telle sorte qu'ils ne soient pas reconnus en tant que tels par le terminal, en particulier écrase un élément de données de protocole DISCONNECT envoyé dans le cas occupé par le central de commutation, et ensuite exécute un routage alternatif.

16. Procédé selon au moins l'une quelconque des revendications 2 à 15, **caractérisé en ce que** le Least Cost Router (3) écoute par l'évaluation du canal d'écho D le numéro de transaction du procédé de signalisation (CALL REFERENCE) ainsi que l'identification de dispositif terminal (TEI) du terminal appelant.

17. Procédé selon au moins l'une quelconque des revendications 2 à 16, **caractérisé en ce que** le Least Cost Router (3) écoute par l'évaluation du canal d'écho D le numéro de transaction du procédé de signalisation (CALL REFERENCE) ainsi que l'identification de dispositif terminal (TEI) du terminal appelant, le Least Cost Router (3) comportant un récepteur propre pour l'écoute en direction d'émission.

18. Procédé selon au moins l'une quelconque des revendications 2 à 17, **caractérisé en ce que** le Least Cost Router (3) pour l'établissement d'une liaison vers un système d'accès d'un réseau de communication approprié utilise une adresse cible modifiée dans l'élément de données de protocole SETUP, adresse qui contient aussi bien le numéro du système d'accès que le numéro du terminal appelé.

19. Procédé selon au moins l'une quelconque des revendications 2 à 18, **caractérisé en ce que**
a) le Least Cost Router (3), pour l'établissement d'une liaison vers un système d'accès d'un réseau de communication approprié dans l'élément de données de protocole SETUP, place comme adresse cible le numéro d'accès pour le système d'accès et comme sous adresse cible le numéro du terminal appelé et
b) le système d'accès place comme nouvelle adresse cible l'ancienne sous adresse cible et établit une liaison vers le terminal appelé.

20. Dispositif pour l'exécution du procédé selon la revendication 1, comportant
a) des moyens (31) pour écouter les ordres de signalisation des différents terminaux (TE1, TE2, TE3) vers le central de commutation (V) et/ou la terminaison de réseau (NT) sans interrompre pour autant la liaison d'autres terminaux de la terminaison RNIS vers l'interface S/T et
b) des moyens de commande (32), qui, après l'écoute du numéro de transaction d'un ordre de signalisation (CALL REFERENCE) ainsi que de l'identification de dispositif terminal (TEI) du terminal (TE1, TE2, TE3), envoie certains ordres de signalisation au central de commutation (V) en utilisant le numéro de transaction écouté (CALL REFERENCE) et l'identification de dispositif terminal (TEI) écoutée.

21. Dispositif selon la revendication 20, **caractérisé en ce que** le dispositif (3) comporte en outre des moyens (33) pour écraser un élément de données de protocole partant vers le central de commutation (V) et/ou d'un élément de données de protocole venant du central de commutation (V).

22. Dispositif selon l'une quelconque des revendications 20 ou 21, **caractérisé en ce que** le dispositif est raccordé à l'interface S/T de la terminaison RNIS, sachant qu'en outre au moins un terminal est raccordé à l'interface S/T de la terminaison RNIS.

23. Dispositif selon la revendication 22. **caractérisé en ce que** le dispositif (3) est intégré dans un terminal (TE1, TE2, TE3) raccordé au bus (1), en particulier un téléphone ou un PC.
